# EUROPEAN PATENT APPLICATION

(11) **EP 4 431 232 A1**
(43) Date of publication of application: **18.09.2024**
(21) Application number: 23305364.4
(22) Date of filing: 16.03.2023
(51) Int. Cl.: B24B 9/14, B24B 49/16, B24B 51/00, B23C 3/16

(54) **PROCESS FOR SHAPING AN OPTIC LENS**

(71) Applicant: Essilor International, 94220 Charenton-Le-Pont (FR)
(72) Inventor: MARANDE, Bruno, 94000 Créteil (FR); LEPAGE, Jean-Etienne, 94340 JOINVILLE-LE-PONT (FR)
(74) Representative: Jacobacci Coralis Harle

(57) **Abstract**

The invention relates to a process for shaping an optic lens using a machining device equipped with blocking means for blocking the optic lens, a machining tool for machining a surface (S₀) of the optic lens and a force sensor adapted to measure a force (F) that is related to the force applied by the machining tool to the optic lens, comprising:
- a step of blocking the optic lens in said blocking means; and
- a step of shaping the optic lens using said machining tool, in which step the value of said force is measured and said machining tool and/or said blocking means are controlled depending on the measured value,
characterized in that, during said step of shaping, said machining tool is controlled such that the speed (V) of the contact point between said optic lens and said machining tool remains substantially equal to a first preset constant (Vt) and such that the measured value of said force remains substantially equal to a second preset constant.

## Description

### TECHNICAL FIELD OF THE INVENTION

The present invention generally relates to the field of eyeglasses.

It more particularly relates to a process for shaping an optic lens using a machining device equipped with blocking means for blocking the optic lens, a machining tool for machining a surface of the optic lens and a force sensor adapted to measure a force that is related to the force applied by the machining tool to the optic lens.

### BACKGROUND INFORMATION AND PRIOR ART

The technical part of the work of an optician, which consists in mounting a pair of ophthalmic lenses in a spectacle frame selected by a customer, may be split into four main operations:
- the acquisition of the shapes of the outlines of the rims of the spectacle frame selected by the customer,
- the centering of each ophthalmic lens, which consists in determining the frame of reference of the lens using centering markings provided thereon, then in suitably positioning the outline of the rim acquired beforehand in the frame of reference of the lens so that, once edged to this outline then mounted in its frame, the lens is correctly positioned with respect to the corresponding eye of the customer and fulfils as best as possible the optical function for which it was designed,
- the blocking of each lens, which consists in attaching a blocking accessory to the lens, so that the lens can be easily extracted from the centering station and then be engaged in the edging station without loss of frame of reference, then
- the edging of each lens, which consists in machining this lens to the outline centered beforehand.

Before these operations, the prescriptions of the customer are acquired by the optician and a pair of semi-finished lenses is selected according to these prescriptions. These semi-finished lenses are then surfaced. In other words, one of their optical surfaces is machined so that the optical power of each lens corresponds to the customer's needs, that is to say to his prescriptions.

Here, the machining operations (surfacing and edging) are more particularly of interest.

These operations can be carried out by the optician or in a lens factory.

Many processes are known to perform these operations.

For instance, the edging operation is generally carried out by an edging machine, as a function of the material of the lens to be edged, in several passes. At each pass, the machining depth is calculated according to the average power consumed by the motor at the previous turn, in order to reduce the time needed to edge the lens.

This method is based on the assumption that the machining operations are repeatable and that the performances of the tools are constant over time.

But in practice, this assumption is wrong. Consequently, the edging machine is not used at the maximum of its possibilities.

The same problems can occur during the surfacing operation.

### SUMMARY OF THE INVENTION

In this context, the present invention provides a solution enabling to use the machining device to its maximum capacity in order to optimize productivity.

More specifically, the invention is directed to a process for shaping an ophthalmic lens using a machining device as defined in the introduction, and comprising:
- a step of blocking the ophthalmic lens in said blocking means, and
- a step of shaping the ophthalmic lens using said machining tool, in which step the value of said force is measured, and said machining tool and/or said blocking means are controlled depending on the measured value,
wherein, during said step of shaping, said machining tool is controlled such that the speed of the contact point between said ophthalmic lens and said machining tool remains substantially equal to a first preset constant and such that the measured value of said force remains substantially equal to a second preset constant.

Consequently, at each instant, the tool is driven so as to machine the ophthalmic lens at its maximum capacity.

Other preferred features of the invention are the following ones:
- at all times during said step of shaping, said machining tool is driven toward a target position the distance of which relative to said surface is determined so that the measured value of said force remains substantially equal to the second preset constant.
- said distance is non null when said surface has to be machined at the contact point and is null otherwise.
- said distance remains during said step of shaping lower than or equal to a preset threshold.
- said surface belonging to an optical face of the optic lens, said step of shaping comprises the machining of said optical face.
- said surface belonging to an edge face of the optic lens, said step of shaping comprises the machining of said edge face.
- said step of shaping comprises a roughing-out sub-step.
- said step of shaping comprises a finishing sub-step, preceded by a roughing-out sub-step, said finishing sub-step comprising a grooving operation or a beveling operation or a milling operation and/or a chamfering operation and/or a polishing operation.

The invention also relates to a machining device for machining an optic lens, comprising:
- blocking means for blocking the optic lens;
- a machining tool for machining the optic lens;
- a force sensor adapted to measure a force related to the force applied by the machining tool to the optic lens; and
- a processing unit for controlling said machining tool relative to said blocking means, programmed to implement the above shaping process.

Preferably, said force sensor comprises at least one unidirectional strain gauge.

### DETAILED DESCRIPTION OF EXAMPLE(S)

The following description with reference to the accompanying drawings, given by way of non-limiting example makes it clear what the invention consists in and how it can be reduced to practice.

In the accompanying drawings:
- Figure 1 is a schematic view of a machining device adapted to implement a lens machining process according to the invention, comprising a machining tool and means for blocking a lens,
- Figure 2 shows a projection of the initial and final outlines of the lens shown in Figure 1, and
- Figure 3 illustrates:

¤ in the first graphic, a variation of the radius of an edge surface of the ophthalmic lens, a variation of the target surface towards which the machining tool is driven and a variation of a limit surface that must not be exceeded,
¤ in a second graphic, a variation of the force applied by the machining tool to the ophthalmic lens, and
¤ in a third graphic, a variation of the speed of the contact point between the machining tool and the ophthalmic lens.

The invention applies to the machining of any surface of an optic lens.

As used herein, the term "optic lens" refers generally to items worn in front of the eyes of a wearer, which may be for purposes of improving or enhancing visual acuity, for protecting against the environment, for fashion. Here, the considered lens is an ophthalmic lens suitable to improve visual acuity.

The invention more precisely applies to the machining of an optical face of the ophthalmic lens (called surfacing) and to the machining of an edge face of the ophthalmic lens (called edging).

In the following, it will be explained in detail how the edging is performed. How the surfacing is performed will not be detailed, since it will be easy for the one skilled to understand how to apply the following teachings to the machining of an optical face of a lens.

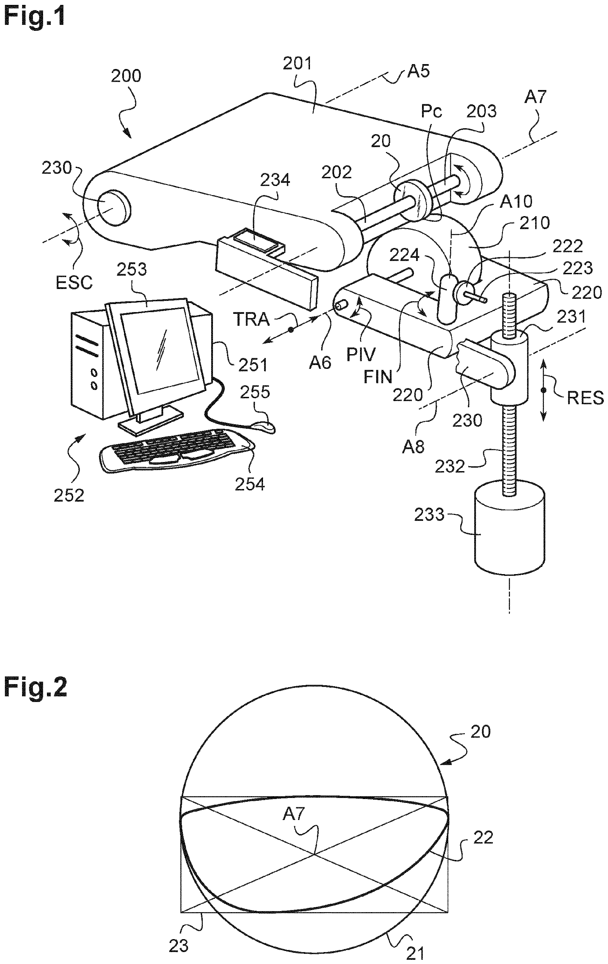

Figure 1 shows a device 200 for edging an ophthalmic lens 20. This device 200 comprises:
- means 202, 203 for clamping the ophthalmic lens 20;
- at least one tool 210, 222, 223 for machining the ophthalmic lens 20;
- a force sensor 234 adapted to measure a force related to the force applied by the machining tool 210, 222, 223 to the ophthalmic lens 20; and
- a unit 251 for controlling the movement of each machining tool 210, 222, 223 relative to the clamping means 202, 203.

This machining device 200 could take the form of any machine for cutting or removing material, able to modify the outline of the ophthalmic lens 20 in order to adapt it to that of the corresponding rim of a spectacle frame selected by an individual (called hereinafter the "wearer" since he is the future wearer of this frame).

In the example schematically illustrated in figure 1, the machining device 200 consists, as is known per se, of an automatic grinder 200, widely referred to as a digital grinder. In this case, this grinder comprises:
- a rocker 201 that is mounted so as to freely pivot about a reference axis A5, in practice a horizontal axis, on a mounting (not shown), and that supports the ophthalmic lens 20 to be machined;
- at least one abrasive wheel 210 that is mounted so as to pivot about an abrasive-wheel axis A6 parallel to the reference axis A5, and that is also duly driven to rotate by a motor (not shown);
- a finishing module 220 that is fitted so as to rotate about the abrasive-wheel axis A6, and that is equipped with tools 222, 223 for finishing the ophthalmic lens 20.

The pivoting mobility of the rocker 201 about the reference axis A5 is called retraction mobility ESC. It allows the ophthalmic lens 20 to be brought closer to the abrasive wheel 210 until the former makes contact with the latter.

This rocker 201 is equipped with two shafts 202, 203 for clamping the ophthalmic lens 20 to be machined and for driving it to rotate, which shafts 202, 203 correspond to the aforementioned "clamping means".

These two shafts 202, 203 are aligned with each other along a clamping axis A7 parallel to the axis A5. Each of the shafts 202, 203 possesses a free end that faces the other and that is equipped with a head for clamping the ophthalmic lens 20.

A first 202 of the two shafts is fixed in translation along the clamping axis A7. In contrast, the second 203 of the two shafts is mobile in translation along the blocking axis A7 in order to allow the ophthalmic lens 20 to be compressively clamped axially between the two clamping heads.

The grinder 200 schematically shown in figure 1 comprises only one cylinder abrasive wheel 210.

In practice, it rather comprises a set of abrasive wheels mounted coaxially on the abrasive-wheel axis A6, each abrasive wheel being used for a specific shaping operation of the ophthalmic lens 20 to be machined.

For the roughing-out of the lens, a roughing-out cylinder abrasive wheel is used. This roughing-out cylinder abrasive wheel is cylindrical, it has a diameter greater than 10 centimetres, and it comprises diamonds whose grain size is between 100 and 500 micrometers and is here equal to 300 micrometers.

For the beveling of the lens, which consists in machining a rib along the edge face of the lens, a shaping abrasive wheel (or "beveling abrasive wheel") can be used, this abrasive wheel containing a beveling groove of dihedral cross-section.

For the polishing of the lens, a cylinder abrasive wheel and a shaping abrasive wheel, of identical geometries to the two abrasive wheels mentioned above, are used, the grain sizes of these polishing abrasive wheels being particularly small.

The set of abrasive wheels is born by a slide (not shown) so as to move in translation along the abrasive-wheel axis A6. The translational movement of the slide bearing the abrasive wheels is called the "transfer" TRA.

Here, the grinder 200 furthermore comprises a link rod 230 one end of which is fixed to the rocker 201 and the other end of which is hinged relative to a nut 231 in order to pivot about an axis A8 parallel to the reference axis A5. This link rod 230 has a varying length (it comprises to this end a slide system not shown in Figure 1).

The nut 231 is itself mounted to move in translation along a restitution axis A9 perpendicular to the reference axis A5 (called the restitution mobility RES). The nut 231 is a tapped nut in screwed engagement with a threaded shank 232 that, aligned with the restitution axis A9, is driven to rotate by a motor 233.

When, duly clamped between the two shafts 202, 203, the ophthalmic lens 20 to be machined is brought into contact with one of the abrasive wheels 210, it is the object of an effective removal of material.

The link rod 230 is equipped with a force sensor 234, here consisting of a unidirectional strain gauge mounted on a gauge support.

This gauge support is attached to the link rod 230 (and consequently to the rocker 201) and is designed to elastically deform when the lens comes into contact with the abrasive wheel 210. It is this deformation that is measured and reflects the force applied to the ophthalmic lens 20 by the abrasive wheel 210.

The measured value is reset when the lens 20 is not in contact with the abrasive wheel 210. Consequently, when the link rod 230 is driven to go down, as soon as the lens comes into contact with the abrasive wheel, this contact generates a deformation of the support that is converted by the strain gauge into an effort (the force F).

Here, the force sensor 234 is placed so as to measure a machining force of substantially vertical direction, corresponding to the radial component of the force exerted by the ophthalmic lens 20 on the abrasive wheel 210 or finishing tool 222, 223 used.

To machine the ophthalmic lens 20 following a given outline, it is therefore enough, on the one hand, to appropriately move the nut 231 along the restitution axis A9, under the control of the motor 233, in order to control the restitution movement RES, and on the other hand, to make the supporting shafts 202, 203 pivot together about the clamping axis A7. The restitution movement (and therefore the retraction movement of the rocker 201) and the rotational movement of the shafts 202, 203 are controlled and coordinated by a controlling unit 251, duly programmed for this purpose, so that all the points of the outline of the ophthalmic lens 20 are, in succession, brought to the correct diameter.

According to the invention, the restitution movement is in particular controlled depending on the machining force F measured by the strain gauge 234.

As for the non-essential finishing module 220, it has a pivoting mobility about the abrasive-wheel axis A6, which mobility is denoted PIV. This mobility allows it to be brought closer to or moved further away from the ophthalmic lens 20.

The finishing tools 222, 223 with which the finishing module 220 is equipped here especially comprise a grooving disk 222 adapted to produce a groove along the edge face of the ophthalmic lens 20, and a milling cutter 223 adapted to chamfer the sharp edges of the ophthalmic lens 20.

These finishing tools 222, 223 are mounted to rotate about a given axis and are driven to rotate by a motor housed in a base 224 that is itself mounted to pivot on the finishing module 220 about an axis A10 orthogonal to the abrasive-wheel axis A6. This pivoting mobility of the base 224 about the axis A10, called the finishing mobility FIN, allows the tools 222, 223 to be best oriented relative to the lens.

The controlling unit 251 is an electronic and/or computing system. It comprises a processing unit, such as a CPU or a controller, or any combination thereof. It also comprises a memory and various input and output interfaces.

Thanks to its input interfaces, the processing unit is suitable for receiving information such that the shape of the initial outline 21 of the lens (Figure 2), the shape of the final outline 22 of the lens, the lens material...

Thanks to its memory, the controlling unit 251 stores a computer application, consisting of computer programs comprising instructions, the execution of which by the processor enables the processing unit to implement the process described below.

Thanks to its output interfaces, the controlling unit 251 is adapted to control:
- the motor for driving the second shaft 203 to move in translation;
- the motor for driving the two shafts 202, 203 to rotate;
- the motor for driving the slide bearing the abrasive wheels to move in translation with its transfer mobility TRA;
- the motor 233 for driving the nut 231 to move in translation with its restitution mobility RES;
- the motor for driving the finishing module 220 to rotate with its pivoting mobility PIV; and
- the motor for driving the base 224 of the finishing tools 222, 223 to rotate with its finishing mobility FIN.

The grinder 200 also comprises a human-machine interface 252 ("HMI") that here comprises a display screen 253, a keyboard 254 and a mouse 255, which are adapted to communicate with the controlling unit 251. This HMI 252 allows the user to enter numerical values, such as the material of the lens, on the display screen 253, so that the tools of the grinder 200 can be appropriately controlled.

In figure 1, the controlling unit 251 is implemented on a desktop computer connected to the grinder 200. Of course, as a variant, the software portion of the grinder could be implemented directly on an electronic circuit of the grinder. It could also be implemented on a remote computer, communicating with the grinder via a private or public network, for example using an IP (Internet) communication protocol.

Figure 2 shows a projection of the initial outline 21 of the lens 20 to be machined, in a main plane (for instance the plane of this initial outline 21).

It also shows a projection of the final outline 22 of the lens 20 after machining. This final outline 22 corresponds for instance to the bottom of a bezel of a rim of the spectacle frame selected by the individual that is suitable to receive the lens once machined.

Figure 2 also shows a "boxing system" of this final outline 22. As already known, this boxing system comprises a box 23 that is a rectangle drawn around the projection of the final outline 22, which has two horizontal sides.

The centre of this box 23 is called boxing center. The lens is here to be blocked between the two shafts 202, 203 such that the blocking axis A7 passes through this boxing center.

Before the machining of the ophthalmic lens 20, the controlling unit 251 acquires the geometry of the final outline 22.

This final outline 22 takes here the form of a set of triplets (rᵢ, θᵢ, zᵢ) corresponding to the cylindrical coordinates of a plurality of points Pᵢ characterizing the shape of this final outline 22 (with i an integer lying from 1 to N, N being for instance equal to 360).

These coordinates can be acquired from a database to which an optician has access, or by using an imaging device comprising image-capturing means and image-processing means suitable to process a photo of a sample lens delivered with the spectacle frame, or by feeling the bottom of the bezel of the rim of the frame selected by the individual.

The lens is then subjected to a centering operation followed by a blocking operation.

These two operations are well known to those skilled in the art and do not form part of the subject matter of the present invention, hence they are only briefly described.

During the centering operation, the positions of markers marked or etched on the lens are determined, and the position required for the final outline 22 is deduced therefrom (so that once the lens has been shaped following this outline and fitted into the selected frame, its optical centre is correctly located relative to the corresponding eye of the spectacle wearer).

During the blocking operation, a gripping accessory is adhesively bonded to the lens in a position centered on the boxing centre, then, by virtue of this gripping accessory, the lens is clamped between the shafts 202, 203 of the edger 200 such that the boxing centre is located centered on the clamping axis A7.

The shaping is then carried out in two operations, namely a roughing-out operation and a finishing operation.

For the roughing-out of the lens, the roughing-out cylinder abrasive wheel 210 is used to coarsely decrease the radii of the lens 20 to the shape of the final outline 22. More precisely, the shafts 202, 203 and the rocker 201 are here controlled relative to each other so as to decrease, for each angular position θᵢ of the lens about the clamping axis A7, the radius of the lens to a length equal to the radius rᵢ of the final outline 20.

To finish the lens, the shaping abrasive wheel and/or any other finishing tool is used to form, on the edge face of the lens, a "bevel" or a groove or any suitable form, and to polish the obtained edge.

The invention applies to both steps. But in the following, we will only describe how the step of roughing-out is performed (the other step being performed in the same way).

During this step, the abrasive wheel 210 follows, relative to the lens 20, a path around the clamping axis A7 (for instance into a spiral). Consequently, the lens 20 is machined in several passes around the clamping axis A7.

According to the invention, the roughing-out step is performed so as to reduce the time required to machine the edge of the lens 20.

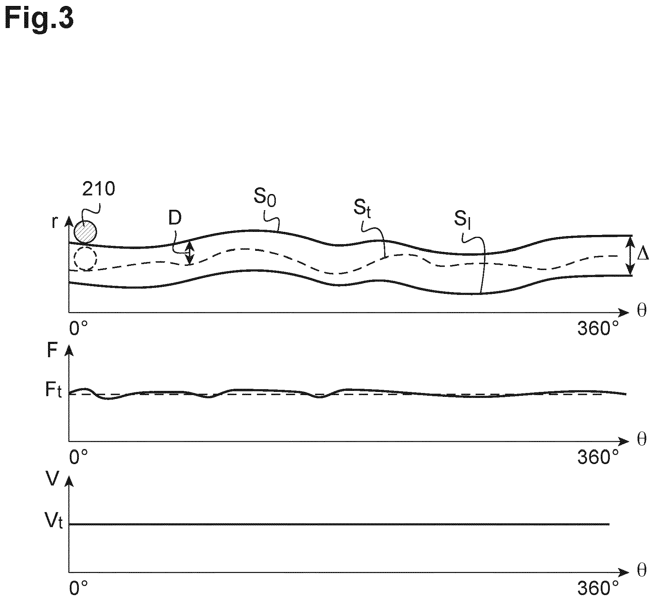

To this end, as shown in Figure 3, during the step of roughing out:
- the value Fₘₑₐₛ of the force F is measured by the sensor 234,
- the rotation of the shafts 202, 203 is controlled such that the machining speed V remains substantially equal to a first preset constant Vt, and
- the torque exercised by the motor 233 is continuously adjusted such that the measured value Fₘₑₐₛ of the force F remains substantially equal to a second preset constant Ft.

Here, the "machining speed V" is defined as the speed of the contact point Pc in a frame of reference attached to the ophthalmic lens 20. In other words, it is the speed of the contact point between the ophthalmic lens 20 and the machining tool 210.

The machining speed therefore depends on the angular speed of the shafts 202, 203 and on the distance between the axis A7 and the contact point Pc.

The value of the first preset constant Vt is determined on the basis of various tests to have a satisfactory compromise between the machining time and the appearance of the finished lens. In practice, it can have two values, either 70mm/s or 14mm/s, depending on the material to be machined. The value of the second preset constant Ft is determined on the basis of various tests to have a satisfactory compromise between the machining time and the appearance of the finished lens. In practice, it can have a value comprised between 1,5 and 2,2 kg. This value may depend on the material to be machined.

For example, the more the lens has a "soft" material, the more it will tend to be machined quickly for the same force applied.

It is possible to maintain the machining speed constant insofar as the distance between the axis A7 and the contact point Pc is well known.

It is more difficult to keep the force F constant since its value is not known in advance and needs to be measured (and to be corrected at all time). This is the reason why Figure 3 shows small variations of the force F around the second preset constant Ft. These variation remains little, that is to say fewer than 5% of the preset constant Ft.

The force F will be kept all the more constant as long as there is material left to be machined and the distance D remains below the threshold Δ. If Δ is reached, then the force F will tend to decrease.

To drive the motor 233 so as to maintain the force F constant, it could be for instance possible to use a feedback loop and a PID controller.

But in a preferred embodiment, the process is performed otherwise.

Figure 3 shows in an upper graph, a first curve S₀ illustrating an example of variation of the radius r of the edge face of the lens as a function of the angle θᵢ, at an arbitrary instant of the machining of the lens edge. Above this curve is represented the abrasive wheel 210 at this instant.

In this upper graph is also shown a second curve St illustrating the position toward which the wheel is driven. This graphic shows that at each instant, that is to say for each angular position θᵢ of the shafts 202, 203, the motor 233 is controlled to try to pull the abrasive wheel 210 at a non-null distance D of the edge face of the lens, toward the axis A7.

The bigger the distance D is, the greater the power of the motor 233 (and the greater the force F is).

For safety reasons, at any instant, this distance D remains lower than or equal to a preset threshold Δ (as shown by a third curve S_{I} on the upper graphic). This threshold Δ depends for instance on the material of the lens. Thanks to this security, the machining of the edge face of the lens remains of good quality.

This distance D is null (zero) when the edge face of the lens does not have to be machined at the contact point Pc and is non-null (non-zero) otherwise.

As shown in the last graph of Figure 3, when this distance D is non-null, it is calculated so that the measured value of the force F remains substantially equal to the second preset constant Ft.

To this end, the distance D is calculated according to the error that there is between the measured value Fₘₑₐₛ of the force F and the second preset constant Ft (this error being multiplied by a gain K). The greater the error, the greater the distance D will be (this distance D being limited to the preset threshold Δ)

In a variant, the distance D (according to which the motor 203 is controlled) can be read in a database.

In this variant, the database comprises for instance three data fields (i.e. 3 colomns). A first field is correlated with the measured value of the force F, a second field is correlated with the distance D to apply if the lens is made of a plastic material, and a third field is correlated with the distance D to apply if the lens is made of glass material. Each register of the database (i.e. each line) corresponds to an interval of measured values. The values in the second and third fields of the database are predetermined, for instance by the manufacturer of the grinder 200.

In other words, in this variant, the distance D is read in the second or the third field (depending on the lens material), in a register (i.e. in a line) that matches with the measured value of the force F.

We can note that, in this variant, the values registered in the database are determined according to the used grinder and the used tool.

This distance D is then transformed into an instruction that is sent to the motor 233.

The present invention is in no way limited to the embodiment described and shown.

For instance, as explained above, the finishing operation (beveling, polishing...) can be performed in the same way with the other tools of the grinder, that is to say by keeping the machining speed equal to a first preset constant and so that the measured value of the force F remains substantially equal to a second preset constant.

## Claims

1. Process for shaping an optic lens (20) using a machining device (200) equipped with blocking means (202, 203) for blocking the optic lens (20), a machining tool (210) for machining a surface (S₀) of the optic lens (20) and a force sensor (234) adapted to measure a force (F) that is related to the force applied by the machining tool (210) to the optic lens (20), comprising:
- a step of blocking the optic lens (20) in said blocking means (202, 203); and
- a step of shaping the optic lens (20) using said machining tool (210), in which step the value of said force (F) is measured and said machining tool (210) and/or said blocking means (202, 203) are controlled depending on the measured value,
**characterized in that**, during said step of shaping, said machining tool (210) is controlled such that the speed (V) of the contact point (Pc) between said optic lens (20) and said machining tool (210) remains substantially equal to a first preset constant (Vₜ) and such that the measured value of said force (F) remains substantially equal to a second preset constant (Ft).

2. Process for shaping according to claim 1, wherein, at all times during said step of shaping, said machining tool (210) is driven toward a target position the distance (D) of which relative to said surface (S₀) is determined so that the measured value of said force (F) remains substantially equal to the second preset constant (Ft).

3. Process for shaping according to claim 2, wherein said distance (D) is non null when said surface (S₀) has to be machined at the contact point (Pc) and is null otherwise.

4. Process for shaping according to claim 2 or 3, wherein, during said step of shaping, said distance (D) remains lower than or equal to a preset threshold (Δ).

5. Process for shaping according to any one of claims 1 to 4, wherein, said surface (S₀) belonging to an optical face of the optic lens (20), said step of shaping comprises the machining of said optical face.

6. Process for shaping according to any one of claims 1 to 4, wherein, said surface (S₀) belonging to an edge face of the optic lens (20), said step of shaping comprises the machining of said edge face.

7. Process for shaping according to claim 6, wherein said step of shaping comprises a roughing-out sub-step.

8. Process for shaping according to claim 6 or 7, wherein said step of shaping comprises a finishing sub-step, preceded by a roughing-out sub-step, said finishing sub-step comprising a grooving operation or a beveling operation or a milling operation and/or a chamfering operation and/or a polishing operation.

9. Machining device (200) for machining an optic lens (20), comprising:
- blocking means (202, 203) for blocking the optic lens (20);
- a machining tool (210) for machining the optic lens (20);
- a force sensor (234) adapted to measure a force (F) related to the force applied by the machining tool (210) to the optic lens (20); and
- a processing unit for controlling said machining tool (210) relative to said blocking means (202, 203),
**characterized in that** said processing unit is programmed to implement a shaping process as claimed in any one of claims 1 to 8.

10. Machining device (200) as claimed in claim 9, in which said force sensor (234) comprises at least one unidirectional strain gauge.
